# EUROPÄISCHE PATENTSCHRIFT

(11) **EP 1 964 110 B1**
(45) Veröffentlichungstag und Bekanntmachung des Hinweises auf die Patenterteilung: **10.01.2018**
(21) Anmeldenummer: 06819365.5
(22) Anmeldetag: 09.11.2006
(51) Int. Cl.: G10L 15/22, G10L 15/18

(54) **VERFAHREN ZUR ANSTEUERUNG VON ZUMINDEST EINER ERSTEN UND ZWEITEN HINTERGRUNDAPPLIKATION ÜBER EIN UNIVERSELLES SPRACHDIALOGSYSTEM**
METHOD FOR TRIGGERING AT LEAST ONE FIRST AND SECOND BACKGROUND APPLICATION VIA A UNIVERSAL LANGUAGE DIALOGUE SYSTEM
PROCÉDÉ DE COMMANDE D'AU MOINS UNE PREMIÈRE ET UNE DEUXIÈME APPLICATION D'ARRIÈRE-PLAN PAR L'INTERMÉDIAIRE D'UN SYSTÈME DE DIALOGUE VOCAL UNIVERSEL

(30) Priorität: 21.12.2005 DE 102005061365
(43) Veröffentlichungstag der Anmeldung: 03.09.2008
(73) Patentinhaber: Unify GmbH & Co. KG, 80807 München (DE)
(72) Erfinder: SONG, Dongyi, 81667 München (DE); BLOCK, Hans-Ulrich, 81675 München (DE); CASPARI, Rudolf, 82223 Eichenau (DE); TOTZKE, Jürgen, 85586 Poing (DE)
(74) Vertreter: Fritzsche, Thomas
(86) Internationale Anmeldenummer: PCT/EP2006/068288
(87) Internationale Veröffentlichungsnummer: WO 2007/073977

(56) Entgegenhaltungen:
- EP-A- 0 996 072
- EP-A- 1 045 374
- WO-A-2006/016307

## Beschreibung

Die Erfindung betrifft ein Verfahren zur Ansteuerung von zumindest einer ersten und zweiten Hintergrundapplikationen über ein universelles Sprachdialogsystem gemäß dem Oberbegriff des Patentanspruches 1.

Sprachdialogsysteme für Datenbankzugriffe, welche Informationszugriffe sowie eine Steuerung von Kommunikationsapplikationen ermöglichen, sind als Schnittstellen zur computergestützten Anwendungen bekannt. Hintergrundapplikationen wie z.B. ein telefonisches Auskunftssystem (Bahn, Flug, Kino, etc.) oder ein computergestützten Transaktionssystem ("Homebanking-System", "elektronische Warenbestellung") sind in zunehmendem Maße über Sprachdialogsysteme als Zugangssysteme - so genannte "User Interfaces" - bedienbar, welche beispielsweise in Hardware, Software oder in einer Kombination aus Hardware und Software realisiert werden.

Der Dialogverlauf zur Erzeugung von anwendungspezifischen Dialogzielen wird hierbei über das Sprachdialogsystem gesteuert, welches Interaktionen zwischen einer Dialog-Management-Einheit und dem jeweiligen Benutzer verwaltet. Die Informationseingabe bzw. Informationsausgabe erfolgt hierbei über eine Eingabeeinheit sowie eine Ausgabeeinheit, welche mit der Dialog-Management-Einheit verbunden sind.

Beispielsweise wird eine von einem Benutzer erzeugte Benutzeräußerung in Form eines Sprachsignals über die Eingabeeinheit erfasst und in der Dialog-Management-Einheit weiterverarbeitet. Mit der Eingabeeinheit ist beispielsweise eine Spracherkennungseinheit verbunden, über welche eine Ermittlung von in der erfassten Benutzeräußerung enthaltenen Aktionsinformationen realisiert wird. Zur Ausgabe von so genannten Aktions- oder Informationsprompts, d.h. vorzugsweise sprachbasierten Anweisungen oder Informationen an den Benutzer kann die Ausgabeeinheit eine Sprachsyntheseeinheit aufweisen und über eine "Text-to-Speech"-Einheit zur Umwandlung von Text in Sprache verfügen.

Über die in der Dialog-Management-Einheit vorgesehene Spracherkennungseinheit werden aus dem Sprachsignal Aktionsinformationen beispielsweise in Form von einzelnen Wörtern oder Wörterketten gewonnen, welche durch Vergleich mit in einer Parsereinheit geladenen Schlüsselbegriffen bzw. Grammatiken ausgewertet werden. Abhängig vom Auswerteergebnis wird eine den Schlüsselbegriffen zugeordnete Transaktion zur Bedienung der zugeordneten Hintergrundapplikation gestartet. Abhängig von der ermittelten Transaktion wird über die Dialog-Management-Einheit ein Dialog mit dem jeweiligen Benutzer zur Steuerung der zugehörigen Hintergrundapplikation gestartet und hierdurch die für die Ausführung der gewünschten Hintergrundapplikation erforderlichen Transaktionsparameter ermittelt.

Zur Realisierung eines derartigen Sprachdialogsystems sind aus dem Stand der Technik im wesentlichen drei Ansätze bekannt, nämlich der "Finite-State-Based" Ansatz, der "Frame-Based" Ansatz und der "Agent-Based" Ansatz. Der "Frame-Based" bzw. rahmenorientierte Realisierungsansatz findet derzeit in der Praxis die weiteste Verbreitung. Dieser basiert auf einer rahmenorientierten Struktur, welche insbesondere in Hinblick auf hierarchische Baumstrukturen basierenden Sprachdialogsystemen deutlich flexibler ausgebildet ist. Eine Transaktion wird mittels eines Rahmens modelliert, welcher beispielsweise mehrere Lücken aufweist, die durch Zuordnung von einzelnen Transaktionsparametern zur Ansteuerung der geplanten Hintergrundapplikation gefüllt werden.

Eine Hintergrundapplikation ist hierbei als eine endliche Menge von Transaktionen aufzufassen, wobei jeder Transaktion eine endliche Menge von Transaktionsparametern zugeordnet sind. Die Transaktionsparameter sind dem Sprachdialogsystem bekannt und werden über eine spezifisch für die einzelnen Transaktionsparameter vorgesehene Grammatik im Dialog mit dem Benutzer erfasst. Hierbei kann der Benutzer beispielsweise die gewünschte Transaktion und den zugeordneten Transaktionsparameter in einem Satz benennen oder auch nicht. Im ersten Fall kann die Transaktion sofort durchgeführt werden und im zweiten Fall ist noch die Erfassung der noch unbekannten Parameter im Dialog mit dem Benutzer erforderlich. Falls durch die Benutzeräußerung keine Transaktion eindeutig bestimmbar ist, führt das System automatisch einen Klärungsdialog zur Ermittlung der gewünschten Transaktion durch. Gleiches gilt für unklare und unvollständige Benutzerangaben bzgl. eines Transaktionsparameters.

Jeder Hintergrundapplikation ist eine Dialogspezifikation zugeordnet, die eine Transaktionsdatenbasis, eine Parameterdatenbasis sowie eine Grammatikdatenbasis aufweist. Jede einzelne Hintergrundapplikation wird jeweils durch ein zugeordnetes Sprachdialogsystem unter Auswertung der jeweils zugeordneten Dialogspezifikation ausgeführt, d.h. zur Ausführung zweier unterschiedlicher Hintergrundapplikationen, beispielsweise einer Hintergrundapplikation "Email" und einer Hintergrundapplikation "Voicemail", sind somit zwei Dialogssysteme erforderlich, die zur Ansteuerung der jeweiligen Hintergrundapplikation getrennt voneinander unter Auswertung der unterschiedlichen Dialogspezifikation aufgerufen werden.

Aus Benutzersicht ist es jedoch wünschenswert, die Benutzerfreundlichkeit derartiger Sprachdialogsysteme dadurch zu erhöhen, dass mehrere unterschiedliche Hintergrundapplikationen über ein gemeinsames Sprachdialogsystem universell bedienbar sind.

Die EP 1 045 374 A1 und die EP 0 996 072 A1 offenbaren ein Verfahren zur Ansteuerung von zumindest einer ersten und zweiten Hintergrundapplikation über ein universelles Sprachdialogsystem gemäß dem Oberbegriff des Anspruchs 1. Die Eingabe von relevanten Daten erscheint jedoch für den Benutzer relativ langwierig zu sein.

Die Aufgabe der vorliegenden Erfindung besteht somit darin, ein Verfahren zur Ansteuerung von zumindest einer ersten und zweiten Hintergrundapplikationen über ein universelles Sprachdialogsystem anzugeben, bei dem mehrere Hintergrundapplikationen über das universelle Sprachdialogsystem über eine reduzierte Anzahl an Benutzeräußerungen gemeinsam bedienbar sind und die Eingabe von relevanten Daten für den Benutzer abgekürzt werden kann. Diese Aufgabe wird mit einen Verfahren nach Patentanspruch 1 gelöst.

Der wesentliche Gedanke des erfindungsgemäßen Verfahrens ist darin zu sehen, dass die ersten und zweiten Transaktionen und die ersten und zweiten Transaktionsparameter über eine universelle Dialogspezifikation miteinander verknüpft werden und zur Ermittlung der zumindest einen Transaktion und zumindest eines zugehörigen Transaktionsparameters zur Ansteuerung der zumindest ersten und zweiten Hintergrundapplikation die universelle Dialogspezifikation über das universelle Sprachdialogsystem ausgewertet wird. Vorteilhaft werden hierdurch mehrere Hintergrundapplikationen über ein einziges "universelles" Sprachdialogssystem ansteuerbar, wodurch der Benutzerkomfort deutlich erhöht wird. Hierzu werden sowohl funktionelle Übereinstimmungen zwischen den einzelnen Transaktionen der anzusteuernden Hintergrundapplikationen sowie semantische Übereinstimmungen deren Transaktionsparameter ermittelt und ausgehend hiervon eine einheitliche universelle Dialogspezifikation gebildet, welche über ein universelles Sprachdialogssystem ausführbar ist.

Insbesondere kann die universelle Dialogspezifikation deklarativ ausgebildet sein, wodurch diese vielseitig und plattformunabhängig in unterschiedlichsten Sprachdialogsystemen eingesetzt werden kann.

Weitere vorteilhafte Ausgestaltungen des erfindungsgemäßen Verfahrens, insbesondere ein universelles Sprachdialogsystem zur Ausführung des Verfahrens sind den weiteren Ansprüchen zu entnehmen.

Die vorliegende Erfindung wird nachfolgend an einem Ausführungsbeispiel anhand von Figuren näher erläutert.

Es zeigen:
- Fig. 1: in einem schematischen Blockschaltbild beispielhaft zwei Sprachdialogsysteme zur Ansteuerung von zwei unterschiedlichen Hintergrundapplikationen,
- Fig. 2: in einem weiteren schematischen Blockschaltbild beispielhaft das erfindungsgemäße universelle Sprachdialogsystem zur Ansteuerung von zwei unterschiedlichen Hintergrundapplikationen, und
- Fig. 3: in einem weiteren Blockschaltbild beispielhaft den Aufbau einer rahmenbasierten Transaktion zur Ansteuerung einer Funktion zumindest einer Hintergrundapplikation.

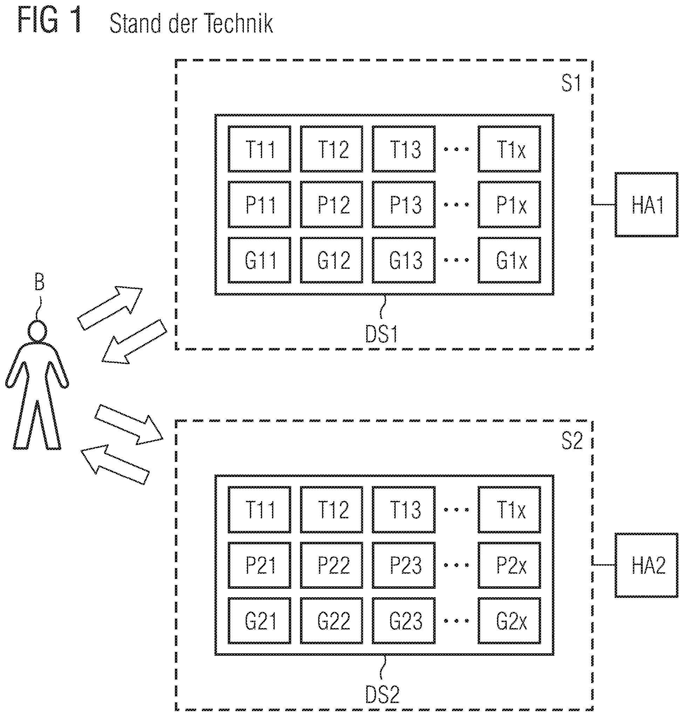

In Fig. 1 sind in einem schematischen Blockschaltbild ein erstes und zweites Sprachdialogsystem S1, S2 zur Ansteuerung einer ersten und zweiten Hintergrundapplikation HA1, HA2 gemäß dem Stand der Technik dargestellt. Die Bedienung der ersten und zweiten Hintergrundapplikation HA1, HA2 erfolgt hierbei getrennt voneinander über das jeweils zugeordnete erste bzw. zweite Sprachdialogsystem S1, S2, welche unterschiedliche technische Realisierungsformen aufweisen können.

Über das erste und zweite Sprachdialogsystem S1, S2 werden unter Auswertung einer ersten bzw. zweiten Dialogspezifikation DS1, DS2 im Dialog mit einem Benutzer B die zur Ansteuerung der ersten bzw. zweiten Hintergrundapplikation HA1, HA2 vorgesehenen Transaktionen T11 - T1X, T21 - T2X, Transaktionsparameter P11 - P1X, P21-P2X sowie zugehörige Grammatiken G11 - G1x, G21 - G2x jeweils applikationsspezifisch ermittelt. Hierbei können beispielsweise einer Transaktion T11 eine oder mehrere Grammatik(en) G11 sowie eine oder mehrere Transaktionsparameter P11 zugeordnet werden, wobei eine Grammatik G11 jeweils die einem Transaktionsparameter P11 zuordenbaren Parameterwerte aufweist.

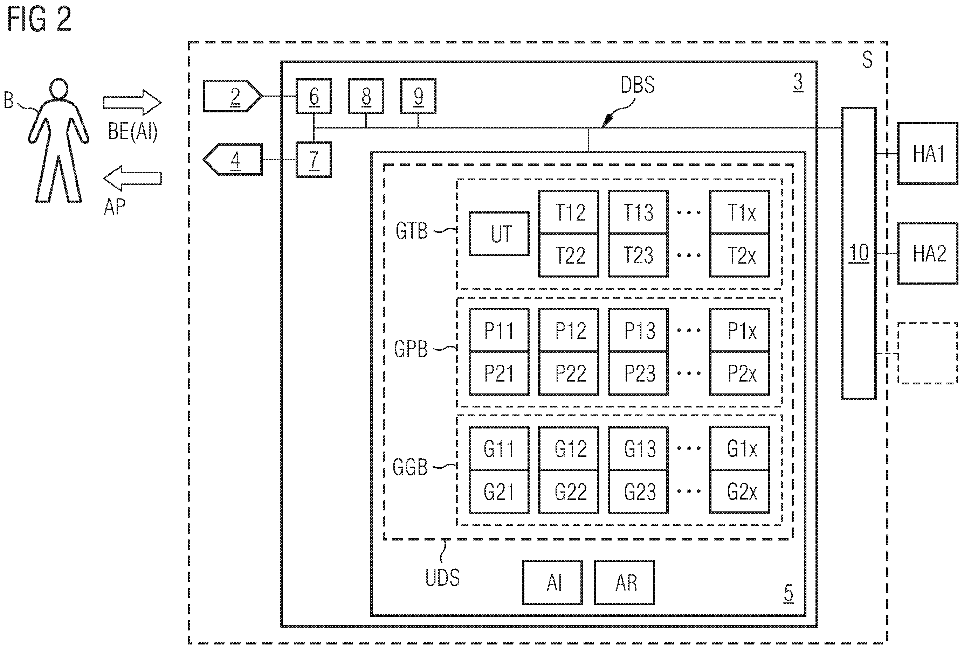

Unterschiedlich hierzu weist das in Figur 2 beispielhaft dargestellte erfindungsgemäße universelle Sprachdialogsystem 1 eine universelle Dialogspezifikation UDS auf, mittels dessen Auswertung ein im Dialog mit dem universellen Sprachdialogsystem 1 stehender Benutzer B zumindest eine erste und zweite Hintergrundapplikation HA1, HA2 gemeinsam bedienen kann. Die Bedienung der ersten und zweiten Hintergrundapplikation HA1, HA2 erfolgt hierbei wiederum beispielhaft anhand einzeln ermittelter und im universellen Sprachdialogsystem 1 gespeicherten Transaktionen T11 - T1X, T21 - T2X, zugehöriger Transaktionsparameter P11 - P1X, P21-P2X und Grammatiken G11 - G1x, G21 - G2x.

Das in Figur 2 dargestellte Sprachdialogsystem 1 umfasst ferner eine Eingabeeinheit 2, eine Dialog-Management-Einheit 3 und eine Ausgabeeinheit 4, wobei die Dialog-Management-Einheit 3 jeweils mit der Eingabeeinheit 2, der Ausgabeeinheit 4 sowie der ersten und zweiten Hintergrundapplikation HA1, HA2 über eine Schnittstelleneinheit 10 ("Integration Layer") in Verbindung steht.

In der Dialog-Management-Einheit 3 ist eine Speichereinheit 5 zur Speicherung der einzelnen Transaktionen T11 - T1X, T21-T2X, der Transaktionsparameter P11 - P1X, P21 - P2X , der Grammatiken G11 - G1x, G21 - G2x sowie weiterer Parameter vorgesehen. Die Dialog-Management-Einheit 3 weist eine Spracherkennungseinheit 6, eine Sprachsyntheseeinheit 7, eine Parsereinheit 8 sowie eine Steuereinheit 9 auf, welche beispielsweise über ein Datenbussystem DBS mit der Schnittstelleneinheit 10 verbunden sind. An das Datenbussystem DBS sind ebenfalls über die Schnittstelleneinheit 10 die erste und zweite sowie ggf. weitere Hintergrundapplikationen HA1, HA2 angeschlossen. Die Eingabeeinheit 2 des Sprachdialogsystems 1 ist mit der Spracherkennungseinheit 6 und die Ausgabeeinheit 4 mit der Sprachsyntheseeinheit 7 verbunden.

Durch den Benutzer B wird im Rahmen eines Benutzerdialoges zur Bedienung bzw. Ansteuerung der ersten und/oder zweiten Hintergrundapplikation HA1, HA2 eine Benutzeräußerung BE erzeugt, welche Aktionsinformationen AI aufweist. Hierbei kann eine Benutzeräußerung BE eine oder mehrere Aktionsinformationen AI aufweisen, welche innerhalb der Benutzeräußerung BE in unterschiedlichen Reihenfolgen angeordnet sein können.

Über die Eingabeeinheit 2 wird eine Benutzeräußerung BE des Benutzers B erfasst und in der Dialog-Management-Einheit 3 mittels einer in der Steuereinheit 9 ausgeführten Auswerteroutine AR weiterverarbeitet. Beispielsweise wird die Benutzeräußerung BE in digitalisierter Form in der Speichereinheit 5 abgespeichert und/oder über die Spracherkennungseinheit 6 in an sich bekannter Weise die in der Benutzeräußerung BE enthaltene Aktionsinformation(en) AI ermittelt, welche in der Speichereinheit 5 gespeichert werden.

Über die Ausgabeeinheit 4 können darüber hinaus dem Benutzer B Ausgabeprompts bzw. Informationsprompts AP zur Verfügung gestellt werden, welche beispielsweise in Form eines über die Sprachsyntheseeinheit 7 erzeugten synthetisierten Sprachsignals über die Ausgabeeinheit 4 ausgegeben werden. Hierdurch wird der Benutzer B beispielsweise über den aktuellen Status der zu bedienenden ersten oder zweiten Hintergrundapplikation HA1, HA2 bzw. der vom Sprachdialogsystem 1 aufgrund der letzten Benutzeräußerung BE durchgeführten Aktionen informiert. Auch kann der Benutzer B zur Abgabe zumindest einer weiteren Benutzeräußerung BE durch die Ausgabe von Informationsprompts AP veranlasst werden, d.h. es wird zwischen dem Benutzer B und dem Sprachdialogsystem 1 ein zwischen Ausgabe- bzw. Informationsprompts AP und Benutzeräußerung BE wechselnder Klärungsdialog durchgeführt.

Zur Ansteuerung von zumindest zwei unterschiedlichen Hintergrundapplikationen HA1, HA2 über das universelle Sprachdialogsystem 1 werden die Transaktionen T11 - T1X, T21 - T2X der ersten oder zweiten Hintergrundapplikation HA1, HA2 miteinander verknüpft und in einer gemeinsamen Transaktionsbasis GTB gespeichert. Analog hierzu werden die Transaktionsparameter P11 - P1X, P21 - P2X der Transaktionen T11 - T1X, T21 - T2X miteinander verknüpft und in einer gemeinsamen Transaktionsparameterbasis GTB gespeichert. Die den jeweiligen Transaktionen T11 - T1X, T21 - T2X zugeordneten Grammatiken G11 - G1X, G21 - G2X werden ebenfalls einer gemeinsamen Grammatikdatenbasis GGB zugeordnet.

Hierbei werden gesteuert über eine in der Steuereinheit 9 ausgeführte Auswerteroutine AR zumindest die Transaktionen T11 - T1X, T21 - T2X und die Transaktionsparameter P11 - P1X, P21 - P2X derart miteinander verknüpft, dass diese über das universelle Sprachdialogsystem 1 in Form einer universellen Dialogspezifikation UDS zur gemeinsamen Ansteuerung der ersten und zweiten Hintergrundapplikationen HA1, HA2 ausgewertet werden können. Die den einzelnen Transaktionen T11 - T1X, T21 - T2X zugeordneten Grammatiken G11 - G1x, G21 - G2x können nahezu unverändert weiterverwendet werden.

In einer besonders bevorzugten Ausführungsform ist die universelle Dialogspezifikation UDS deklarativ ausgebildet, d.h. es werden über die universelle Dialogspezifikation UDS zwar die Dialogziele des Klärungsdialoges vorgeben, der zum Erreichen der Dialogziele durchzuführende Dialog ist jedoch offen.

Im Rahmen der Verknüpfung der ersten und zweiten Dialogspezifikation S1, S2 treten im wesentlichen drei unterschiedliche Szenarien auf, welche im folgenden näher erläutert werden.

Das erste Szenario betrifft diejenigen Hintergrundapplikationen HA1, HA2, bei denen weder die Transaktionen T11 - T1X, T21 - T2X der Hintergrundapplikationen HA1, HA2 funktionale Übereinstimmungen noch die diesen zugeordneten Transaktionsparameter P11 - P1X, P21 - P2X semantische Übereinstimmungen aufweisen. Die erste und zweite Hintergrundapplikation HA1, HA2 sind somit funktional und auch semantisch deutlich unterschiedlich zueinander ausgebildet. Die Transaktionen T11 - T1X, T21 - T2X und die zugeordneten Transaktionsparameter P11 - P1X, P21 - P2X werden zur Erzeugung der universellen Dialogspezifikation UDS derart verknüpft, dass diese über das universelle Sprachdialogsystem 1 auswertbar sind, d.h. die entsprechenden Funktionen der ersten und zweiten Hintergrundapplikation HA1, HA2 nacheinander über ein gemeinsames Benutzerinterface bedienbar wird.

Das zweite Szenario umfasst diejenigen Hintergrundapplikationen HA1, HA2, die zumindest funktional übereinstimmende Transaktion T11, T21 aufweisen, über welche in beiden Hintergrundapplikationen HA1, HA2 dieselbe Funktion angesteuert wird. Zur Erhöhung des Bedienungskomforts des universellen Sprachdialogsystem 1 werden über die in der Steuereinheit 9 ausgeführte Steuerroutine funktionale Übereinstimmungen zwischen den der ersten Hintergrundapplikation HA1 zugeordneten Transaktionen T11-T1X und den der zweiten Hintergrundapplikation HA1 zugeordneten Transaktionen T21 - T2X ermittelt und diese zur vereinfachten gemeinsamen Ansteuerung der funktional übereinstimmenden Transaktionen T11 - T1X, T21 - T2X miteinander verknüpft. Hierbei entsteht beispielsweise aufgrund der Verknüpfung zweier Transaktionen T11, T21 eine neue universelle Transaktionen UT, welche in der universelle Dialogspezifikation UDS anstelle der Transaktionen T11, T21 hinterlegt wird.

Beispielsweise weisen eine Hintergrundapplikation "Email" und eine Hintergrundapplikation "Voicemail" jeweils ein Adressbuchfunktionalität mit einer zugeordneten Transaktion "Kontaktsuche" auf. Die in beiden Hintergrundapplikationen "Email" und "Voicemail" funktional übereinstimmende Transaktion "Kontaktsuche" wird durch die Auswerteroutine AR erkannt und eine der beiden Transaktionen "Kontaktsuche" zur gemeinsamen Ansteuerung der Hintergrundapplikationen "Email" und "Voicemail" in der universellen Dialogspezifikation UDS als universelle Transaktion "Kontaktsuche" mit beiden Hintergrundapplikationen "Email" und "Voicemail" verknüpft. Wird beispielsweise durch den Benutzer B über eine der beiden Hintergrundapplikationen "Email" oder "Voicemail" die Telefonnummer der Kontaktperson "Robert" abgefragt, so erfolgt dies in beiden Hintergrundapplikationen HA1, HA2 mittels der in der universellen Dialogspezifikation UDS vorgegebenen universellen Transaktion "Kontaktsuche". Hierbei ist es für den Benutzer B keinesfalls relevant, welche der ursprünglichen Transaktionen "Kontaktsuche" der Hintergrundapplikationen "Email" oder "Voicemail" das gewünschte Ergebnis, nämlich die Telefonnummer von "Robert" liefert.

Gemäß einem dritten Szenario werden über die in der Steuereinheit 9 ausgeführte Auswerteroutine AR jeweils semantisch übereinstimmende Transaktionsparameter P11 - P1X, P21 - P2X der ersten Hintergrundapplikation HA1 und der zweiten Hintergrundapplikation HA2 ermittelt und bei semantischer Übereinstimmung diese miteinander verknüpft, so dass beispielsweise vom Benutzer B mittels einem Klärungsdialog oder durch direkte Benutzeräußerung BE bereits erhaltene Aktionsinformationen AI zur Ausführung zumindest einer weiteren Transaktionen wieder verwendet werden, d.h. in einem semantischen Bezug zueinander stehende Transaktionsparameter P11 - P1X, P21 - P2X werden vorteilhaft miteinander verknüpft, um die vom Benutzer B zur Ansteuerung einer weiteren Hintergrundapplikation HA2 aufzuwenden Benutzeräußerungen BE zu reduzieren. Hierdurch können wiederholte Eingaben von Informationen durch den Benutzer B im Rahmen des Klärungsdialoges vermieden werden.

Beispielsweise weisen die Hintergrundapplikation "Hotel" und die Hintergrundapplikation "Flug" semantische Übereinstimmungen der im Rahmen der Transaktionen "Hotel Reservierung" und der Transaktion "Flug Reservierung" zuordenbaren Transaktionsparameter P11 - P1X, P21 - P2X auf. Üblicherweise ist anzunehmen, dass der Transaktionsparameter "Ablugtag" bzw. "Ankunftszeit" der Transaktion "Flug Reservierung" mit den Transaktionsparametern "Ankunftstag" bzw. "Ankunftszeit" der Transaktion "Hotel Reservierung" übereinstimmen bzw. in einem absehbaren Bezug zueinander stehen. Durch Wiederverwendung von semantisch übereinstimmenden Transaktionsparametern P11 - P1X, P21 - P2X kann bei der Durchführung des Klärungsdialogs mit dem Benutzer B zur Ansteuerung der Hintergrundapplikation "Hotel Reservierung" bereits im Rahmen des Klärungsdialoges zur Ansteuerung der Hintergrundapplikation "Flug Reservierung" gewonnene Informationen wieder verwendet werden, wodurch aufgrund der eingesparten Benutzeräußerung BE das gesamte universelle Sprachdialogsystem 1 deutlich benutzerfreundlicher wird.

In einem weiteren Ausführungsbeispiel werden zwei Hintergrundapplikationen, und zwar die Hintergrundapplikation "Lichtsteuerung" sowie die Hintergrundapplikation "Weckanruf" über ein universelles Sprachdialogsystem 1 mittels einer universellen Dialogspezifikation UDS angesteuert. Die vorliegenden Hintergrundapplikationen "Lichtsteuerung" und "Weckruf" weisen jedoch keinerlei funktionale noch semantische Übereinstimmungen auf, d.h. sind voneinander "disjunkt". Die einzelnen Transaktionen sowie Transaktionsparameter der beiden Hintergrundapplikation "Lichtsteuerung" sowie "Weckanruf" werden der gemeinsamen Transaktionsbasis GTB und der Transaktionsparameterbasis GPB nahezu unverändert zur Bildung der universellen Dialogspezifikation UDS zugeordnet. Unter Auswertung der universellen Dialogspezifikation UDS ergibt sich beispielsweise folgender Dialog zwischen dem Benutzer B und dem Sprachdialogsystem 1:
- System:: ***Wie kann ich Ihnen helfen?***
- Benutzer:: ***Bitte wecken Sie mich um 7 Uhr.***
- System:: ***Sie werden um 7 Uhr geweckt.***
- Benutzer:: ***Bitte schalten Sie das Licht im Schlafzimmer aus.***
- System:: ***Das Licht im Schlafzimmer wird ausgeschaltet.***

Hierdurch kann beispielsweise eine nochmalige Anmeldung am System, welche gemäß dem Stand der Technik zur Ansteuerung der weiteren Hintergrundapplikation "Lichtsteuerung" erforderlich wäre, entfallen.

In dem bereits zuvor geschilderten Ausführungsbeispiel der Hintergrundapplikation "Hotel" und der Hintergrundapplikation "Flug" werden beispielsweise die Transaktionsparameter "Ankunftstag" und "Ankunftsort" der Transaktion "Flugreservierung" durch die Transaktion "Hotelreservierung" insbesondere auch bei der Erzeugung eines angepassten Aktionsprompts AP wieder verwendet. Ein hierdurch verbesserter Benutzerdialog zwischen dem Benutzer B und dem universellen Sprachdialogsystems 1 könnte wie folgt lauten:
- System:: ***Wie kann ich Ihnen helfen?***
- Benutzer:: ***Ich möchte morgen um 10 Uhr von München nach Berlin fliegen.***
- System:: ***Flug 731 von*** München nach Berlin startet morgen, den 14. September 2005 ***um 10 Uhr. Wollen Sie diesen Flug nehmen?***
- Benutzer:: ***Ja***
- System:: ***Ihr Ticket wurde reserviert.***
- Benutzer:: ***Ich möchte ein Hotel buchen.***
- System:: Wollen Sie ein Hotel am 14. September in Berl***in reservieren?***
- Benutzer:: ***Ja, und zwar das Hotel "Mercure"***
- System:: ***Es wurde für Sie ein Zimmer im Hotel "Mercure" für die Nacht vom 14. auf den 15. September gebucht.***

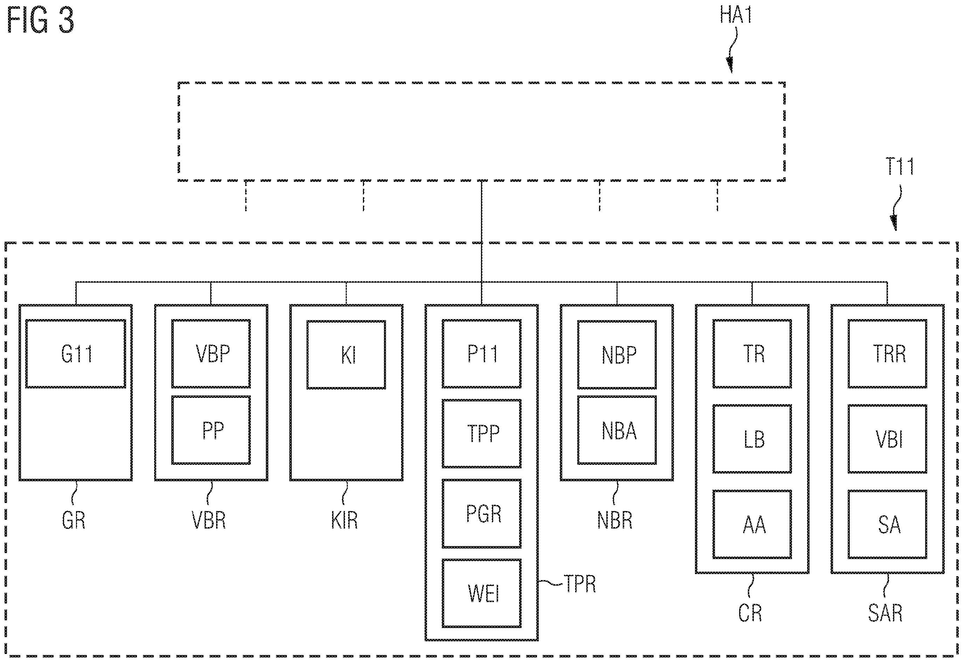

In einer bevorzugten Ausführungsform des erfindungsgemäßen Verfahrens weisen die Transaktionen T11 - T1x, T21 - T2x den in Figur 3 beispielhaft an einer ersten Transaktion T11 der ersten Hintergrundapplikation HA1 dargestellte rahmenbasierte Struktur auf.

Zur Erhöhung der Benutzerfreundlichkeit wird im darüber hinaus im universellen Sprachdialogsystem 1 den in einen Sinnzusammenhang stehenden Transaktionen T11 - T1x innerhalb einer Hintergrundapplikation HA1, HA2 jeweils zumindest eine übereinstimmende Kontextinformation KI zugeordnet und beispielsweise die einen Sinnzusammenhang aufweisenden Transaktionen T11, T21 zu einer Transaktionsgruppe TG zusammengefasst.

Beispielsweise weist eine Hintergrundapplikation "Unified Messaging System" eine Vielzahl von ähnlichen Funktionen auf, welche über in einem Sinnzusammenhang stehende Transaktionen T11 - T1x angesteuert werden. Beispielsweise die Transaktion "Email lesen" und die Transaktion "Email löschen" können durch die Zuordnung der Kontextinformation KI ="Email Verarbeitung" zu einer Transaktionsgruppe "Email Verarbeitung" zusammengefasst werden. Somit wird durch die Kontextinformation KI die kontextbedingte Verknüpfung unterschiedlicher Transaktionen T11 - T1x einer Hintergrundapplikation HA1, HA2 für die aktuelle Ermittlung einer Transaktion T1 bis Tx ausgewertet und hierdurch der Zeit- und Rechenaufwand für die Durchführung des Ermittlungsverfahrens deutlich reduziert.

Bei der Ermittlung einer Transaktion T11 wird über die in der Steuereinheit 9 ausgeführte Steuerroutine die Kontextinformation KI der zuletzt ausgeführten Transaktion ausgewertet, und zwar derart, dass bevorzugt diejenigen Transaktionen T12, T13 bei der Ermittlung berücksichtigt werden, deren zugeordnete Kontextinformation KI mit der gespeicherten Kontextinformtion KI übereinstimmt. Für die Ermittlung der aktuellen Transaktion T11 wird somit zunächst diejenige Gruppe von Transaktionen T11 - T13 ausgewertet, der die zuletzt ausgeführte Transaktion angehört. Hierdurch werden besonders vorteilhaft die einer gemeinsamen Transaktionengruppe angehörenden Transaktionen T11 - T13 im Auswahlverfahren priorisiert und somit diejenigen Transaktionen T11 - T1x bevorzugt ausgeführt, die die größte "Trefferwahrscheinlichkeit" aufweisen.

Zur Überprüfung der Kontextinformation KI ist jeweils einer Transaktion T11 eine Kontextinformationsroutine KIR zugeordnet, die die Übereinstimmung der der Kontextinformation KI der vorliegenden Transaktion T11 mit der zuletzt in der Dialog-Management-Einheit 3 ausgeführten Transaktion überprüft. Stimmen die zuletzt gespeicherte Kontextinformation und die der ersten Transaktion T1 zugeordnete Kontextinformation KI überein, so wird die betrachtete erste Transaktion T11 bei der Ermittlung der aktuellen Transaktion bevorzugt berücksichtigt, d.h. die aus der Benutzeräußerung BE gewonnenen Aktionsinformationen AI über die in der Parsereinheit 8 ausgeführte Grammatikroutine GR der betrachteten Transaktion T11 ausgewertet. Die Kontextinformation KI kann beispielsweise den Parametertyp "String" aufweisen, der einen den Sinnzusammenhang zwischen den Transaktionen T11 bis T1x wiedergebenden Oberbegriff darstellt.

Zusätzlich ist jeder Transaktion T11 - T1x innerhalb einer Hintergrundapplikation HA1, HA2 jeweils eine Transaktionsparameterroutine TPR zugeordnet, die - neben den ermittelten Transaktionsparametern P11 - P1x - Transaktionsparameterprompts TPP, eine Parametergrammatik PGR sowie eine Wertermittlungsinformation WEI aufweist. Die Transaktion T11 wird durch ihre Transaktionsparameter P11-P1x inhaltlich spezifiziert, deren Werte über die Transaktionsparameterroutine TPR ermittelt werden. Hierzu werden über die in Parsereinheit 8 ausgeführte Parametergrammatik PGR aus den Aktionsinformationen AI die Werte der Transaktionsparameter P11 - P1x ermittelt. Die zur Ausführung der Transaktion T11 noch zu bestimmenden Transaktionsparameter P11 - P1x werden durch Ausgabe des jeweils zugeordneten Transaktionsparameterprompts TPP an den Benutzer B und dessen in einer weiteren Benutzeräußerung BE enthaltenen Aktionsinformationen AI im Rahmen eines Klärungsdialoges abgefragt.

Ferner wird über jeweils den einzelnen Transaktionsparametern P11 - P1x zugeordnete Wertermittlungsinformationen WEI die zuvor beschriebene Verknüpfung aufgrund semantischer Übereinstimmungen zweier Transaktionsparameter P11,P21 realisiert. Beispielsweise können zur Ermittlung der Transaktionsparameter P11 - P1x neben der Durchführung eines Klärungsdialogs mit dem Benutzer B die im universellen Sprachdialogsystem 1 bereits vorliegenden Parameterwerte P21-P2x einer der weiteren Transaktion T21 -T2x der zweiten Hintergrundapplikation HA2 ausgewertet werden.

Zur Überprüfung der Gültigkeit eines geänderten Transaktionsparameters ist eine Constraint-Routine CR pro Transaktion T11 - T1x vorgesehen, welche Triggerparameter TR, logische Bedingungen LB sowie Aktionsanweisungsprompts AA umfasst. Über die Contraint-Routine CR wird somit der geänderte Parameterwert eines Transaktionsparameters P11-P1x auf seine Gültigkeit mit Hilfe der vorgegebenen Triggerparameter TR sowie der logischen Bedingung LB ermittelt und bei einem Abweichen über Aktionsanweisungsprompts AA an dem Benutzer B kommuniziert. Beispielsweise wird als logische Bedingung LB vorgegeben, die Summe aus zwei Transaktionsparametern P1, P2 zu bilden und zu überprüfen, ob diese beispielsweise einen oberen Grenzwert Pₘₐₓ überschreitet. Beim Überschreiten des oberen Grenzwertes Pₘₐₓ wird der zugeordnete Aktionsanweisungsprompt AA der Contraint-Routine CR ausgegeben. Alternativ kann auch abhängig von der Auswertung der logischen Bedingung LB eine vorgegebene Systemfunktion initiiert werden.

Über eine Nachbedingungsroutine NBR wird überprüft, ob sämtliche für die Ausführung der jeweiligen Transaktion T11-T1x erforderlichen Nachbedingungen NB, beispielsweise die für die Ausführung zumindest erforderlichen Transaktionsparameter P11 - P1x, nunmehr vorliegen, d.h. die Lücken der als Rahmen modellierten Transaktion T11 gefüllt sind und mit Hilfe der ausgewählten Transaktion T11 die zugeordnete Funktion der Hintergrundapplikation HA nunmehr gestartet werden kann. Somit werden über die Nachbedingungsroutine NBR diejenigen Nachbedingungen NB überprüft, welche am Ende des Dialoges vorliegen müssen, um eine Übergabe sämtlicher für die Bedienung der Hintergrundapplikation HA erforderlichen Informationen über die Transaktion T11 zu gewährleisten. Vorteilhaft können durch die Nachbedingungsroutine NBR unterschiedlich komplexe Nachbedingungen NB für unterschiedliche Transaktionen T11 - T1x individuell definiert und abgeprüft werden.

Schließlich weist die Transaktion T11 eine Systemaktionsroutine SAR auf, mit deren Hilfe die Ausgabe von spezifischen Aktionsprompts AP bzw. Systemaktionen SA umgesetzt wird. Die Systemaktionsroutine SAR umfasst hierzu beispielsweise Systemtriggerparameter TRP sowie Vorbedingungsinformationen VBI als auch vorgegebene Systemaktionen SA. Bei einer Änderung der Systemtriggerparameter TRP wird über die Vorbedingungsinformationen VBI die Initiierung der vorgegeben Systemaktionen SA verifiziert und gegebenenfalls die zugeordneten Systemaktionen SA gestartet. Mit Hilfe der Systemaktionsroutine SAR wird somit der Benutzer B über eine Änderung des Dialogstatus oder des Status der Hintergrundapplikation HA1 informiert.

Die universelle Dialogspezifikation UDS kann in einer alternativen Ausführungsform beispielsweise mittels einer Entwicklungsroutine erzeugt werden, welche abhängig von den vorliegenden Übereinstimmungen der gemeinsam anzusteuernden Hintergrundapplikationen HA1, HA2 vorgegebene Parameter oder manuelle Eingaben eines Bedieners erfordert. Mittels der beispielsweise auf einer Rechnereinheit ausgeführten Entwicklungsroutine können die zur Ansteuerung der ersten Hintergrundapplikation HA1 vorgesehene erste Dialogspezifikation DS1 und die zur Ansteuerung der zweiten Hintergrundapplikation HA2 vorgesehene zweite S Dialogspezifikation DS2 zu einer universellen, gemeinsamen Dialogspezifikation UDS verschmolzen werden.

In einem ersten Schritt werden ausgehend von der ersten und zweiten Hintergrundapplikation HA1, HA2 über die Entwicklungsroutine diejenigen Transaktionen T11 - T1x, T21-T2x ermittelt, die erfindungsgemäß funktional übereinstimmen. Hierbei werden sämtliche möglichen funktionalen oder semantischen Übereinstimmungen ermittelt, und diese mit in einer durch den Bediener vorgegebenen Referenzparametern verglichen und abhängig davon die jeweilige Verknüpfung zwischen den ermittelten funktional übereinstimmenden Transaktionen T11 - T1X, T21 - T2X bzw. semantisch übereinstimmenden Transaktionsparameter P11 - P1X, P21 - P2X erstellt. Hierzu werden sukzessive sämtliche Transaktionen T11 - T1X, T21 - T2X bzw. Transaktionsparameter P11 - P1X, P21 - P2X einzeln zur Erzeugung der universellen Dialogspezifikation UDS jeweils paarweise abgearbeitet.

Zur Ermittlung einer funktionalen Übereinstimmung zwischen zwei Transaktionen T11, T21 werden beispielsweise die den zugeordneten Grammatiken G11, G21 bzw. Schlüsselbegriffen verglichen. Beispielsweise kann der Transaktion "Ticketreservierung" in die Grammatik bzw. die Schlüsselbegriffe "Buchung", "Reservierung" etc. zugeordnet werden. Werden über die Entwicklungsroutine übereinstimmende Schlüsselbegriffe ermittelt, so liegt eine funktionale Übereinstimmung zwischen den betrachteten Transaktionen T11, T21 vor. Ist dies nicht der Fall, so sind beide unterschiedlich.

Zur Verknüpfung der funktional übereinstimmenden Transaktionen T11, T21 werden jeweils deren Nachbedingungsroutinen NBR kombiniert, beispielsweise diesen eine gemeinsame Nachbedingungsroutine (NBP) zugeordnet. Der Transaktion "Login" der Hintergrundapplikation "E-Mail" und der Transaktion "Login" der Hintergrundapplikation "Voicemail" wird beispielsweise aufgrund der übereinstimmenden Schlüsselbegriffe eine gemeinsame Nachbedingungsroutine NBR zugeordnet, welche angepasste Nachbedingungsaktionen NBA aufweist. Beispielsweise wird als Nachbedingungsaktion NBA entweder der Informationsprompt *"Sie sind im System für die Hintergrundapplikation E-Mail und Voicemail eingeloggt"* oder *"Ihr Login ist gescheitert"* abhängig davon ausgegeben, ob zumindest die Transaktion "Login" bei einer der beiden Hintergrundapplikationen "E-Mail" oder "Voicemail" erfolglos geblieben ist.

Analog hierzu werden mittels der Entwicklungsroutine semantische Übereinstimmungen zwischen den Transaktionsparametern P11 - P1x, P21 - P2x der unterschiedlichen Transaktionen T11 - T1x, T21 - T2x ermittelt. Hierzu werden die einem Parametern P11 - P1x, P21 - P2x systembedingt zuordenbaren Transaktionsparameterwerte von jeweils zwei Transaktionen T11 - T1x, T21 - T2x verglichen und abhängig vom Vergleichsergebnis eine semantische Übereinstimmung zwischen den Parametern P11-P1x, P21 - P2x festgestellt oder nicht. In einer bevorzugten Ausführungsform sollte zumindest einer der zuordenbaren Parameterwerte eines ersten Parameters P11 mit zumindest einem eines zuordenbaren Parameterwertes eines zweiten Parameters P21 übereinstimmen. Andernfalls liegt keine semantische Übereinstimmung vor.

Die Erfindung wurde voranstehend anhand eines Ausführungsbeispiels näher beschrieben.

## Patentansprüche

1. Verfahren zur Ansteuerung von zumindest einer ersten und zweiten Hintergrundapplikation (HA1, HA2) über ein universelles Sprachdialogsystem (1), bei dem ausgehend von zumindest einer Benutzeräußerung (BE), welche Aktionsinformationen (AI) aufweist, zur Ansteuerung zumindest der ersten oder zweiten Hintergrundapplikation (HA1, HA2) zumindest eine Transaktion (T11 - T1x, T21 - T2x) und zumindest ein dieser zugeordneter Transaktionsparameter (P11- P1x, P21 - P2x) aus den Aktionsinformationen (AI) ermittelt werden, wobei der ersten Hintergrundapplikation (HA1) erste Transaktionen (T11 - T1x) und erste Transaktionsparameter (P11- P1x) und der zweiten Hintergrundapplikation (HA2) zweite Transaktionen (T21 - T2x) und zweite Transaktionsparameter (P21- P2x) zugeordnet sind, wobei
- die ersten und zweiten Transaktionen (T11 - T1x, T21-T2x) und die ersten und zweiten Transaktionsparameter (P11 - P1x, P21 - P2x) über eine universelle Dialogspezifikation (UDS) miteinander verknüpft werden und
- zur Ermittlung der zumindest einen Transaktion (T11) und zumindest eines zugehörigen Transaktionsparameters (P11) zur Ansteuerung zumindest einer der Hintergrundapplikationen (HA1, HA2) die universelle Dialogspezifikation (UDS) über das universelle Sprachdialogsystem (1) ausgewertet wird,
**dadurch gekennzeichnet,**
**dass** jeweils semantische Übereinstimmungen aufweisende Transaktionsparameter (P11 - P1X, P21 - P2X) der ersten und zweiten Hintergrundapplikationen (HA1, HA2) über die universelle Dialogspezifikation (UDS) miteinander verknüpft werden, so dass bereits erhaltene Aktionsinformationen (AI) zur Ausführung zumindest einer weiteren Transaktion wieder verwendet werden.

2. Verfahren nach Anspruch 1,
**dadurch gekennzeichnet,**
**dass** bei der Ermittlung einer mehrere zugeordnete Transaktionsparameter (P11 - P1x bzw. P21 - P2x) aufweisenden Transaktion (T11) sämtliche zugehörigen Transaktionsparameter (P11) ermittelt werden.

3. Verfahren nach Anspruch 1 oder 2,
**dadurch gekennzeichnet,**
**dass** die universelle Dialogspezifikation (UDS) deklarativ ausgebildet wird.

4. Verfahren nach einem der Ansprüche 1 bis 3,
**dadurch gekennzeichnet,**
**dass** die über die universelle Dialogspezifikation (UDS) verknüpften ersten und zweiten Transaktionen (T11 - T1x, T21-T2x) in einer gemeinsamen Transaktionsdatenbasis (GTB) gespeichert werden.

5. Verfahren nach einem der Ansprüche 1 bis 4,
**dadurch gekennzeichnet,**
**dass** die über die universelle Dialogspezifikation (UDS) verknüpften ersten und zweiten Transaktionsparameter (P11 - P1x, P21 - P2x) in einer gemeinsamen Transaktionsparameterdatenbasis (GPB) gespeichert werden.

6. Verfahren nach einem der vorhergehenden Ansprüche, **dadurch gekennzeichnet,**
**dass** die der ersten Hintergrundapplikation (HA1) zugeordneten ersten Grammatiken (G11 - G1x) und die der zweiten Hintergrundapplikation (HA2) zugeordneten zweiten Grammatiken (G21 - G2x) in einer gemeinsamen Grammatikdatenbasis (GGB) zusammengefasst werden und der universellen Dialogspezifikation (UDS) zugeordnet werden.

7. Verfahren nach Anspruch 6,
**dadurch gekennzeichnet,**
**dass** jeweils einer Transaktion (T11 - T1x, T21 - T2x) zumindest eine Grammatik (G11 - G1x, G21 - G2x) zugeordnet ist und dass die einer Transaktion (T11 - T1x, T21 - T2x) zugeordnete Grammatik (G11 - G1x, G21 - G2x) die jeweils einem Transaktionsparameter (P11 - P1x, P21 - P2x) zuordenbaren Parameterwerte aufweist.

8. Verfahren nach einem der vorhergehenden Ansprüche,
**dadurch gekennzeichnet,**
**dass** zumindest einer der Transaktionen (T11 - T1x, T21 - T2x) zumindest eine Nachbedingungsroutine (NBR) zugeordnet wird.

9. Verfahren nach einem der vorhergehenden Ansprüche,
**dadurch gekennzeichnet,**
**dass** jeweils funktionale Übereinstimmungen aufweisende Transaktionen (T11 - T1X, T21 - T2X) der ersten und zweiten Hintergrundapplikationen (HA1, HA2) über die universelle Dialogspezifikation (UDS) miteinander verknüpft werden.

10. Verfahren nach Anspruch 9,
**dadurch gekennzeichnet,**
**dass** zur Verknüpfung von zumindest zwei funktional übereinstimmenden Transaktionen (T11, T21) aus diesen eine universelle Transaktion (UT) gebildet wird.

11. Verfahren nach Anspruch 9 oder 10,
**dadurch gekennzeichnet,**
**dass** zur Ermittlung einer funktionalen Übereinstimmung zwischen zwei Transaktionen (T11, T21) die den Transaktionen (T11, T21) zugeordneten Grammatiken (G11, G21) miteinander verglichen werden und
**dass** abhängig vom Vergleichsergebnis eine funktionale Übereinstimmung zwischen zwei Transaktionen (T11, T21) festgestellt wird oder nicht.

12. Verfahren nach Anspruch 10 oder 11,
**dadurch gekennzeichnet,**
**dass** im Rahmen der Verknüpfung zweier funktional übereinstimmender Transaktionen (T11, T21) der universellen Transaktion (UT) eine gemeinsame Nachbedingungsroutine (NBP) zugeordnet wird.

13. Verfahren nach einem der vorhergehenden Ansprüche,
**dadurch gekennzeichnet,**
**dass** zur Ermittlung einer semantischen Übereinstimmung zwischen zwei Transaktionsparametern (P11, P21) die den Transaktionsparametern (P11, P21) zuordenbaren und in der jeweiligen Grammatik (G11, G21) vorgesehenen Parameterwerte miteinander verglichen werden und
**dass** abhängig vom Vergleichsergebnis eine semantische Übereinstimmung zwischen zwei Transaktionsparametern (P11, P21) festgestellt wird oder nicht.

14. Verfahren nach Anspruch 13,
**dadurch gekennzeichnet,**
**dass** der Parameterwert eines Transaktionsparameters (P11-P1x, P21 - P2x) mittels einer Transaktionsparameterroutine (TPR) ermittelt wird, wobei einem Transaktionsparameter (P11 - P1x, P21 - P2x) eine Wertermittlungsinformation (WEI) zugeordnet ist, die den Ermittlungsweg angibt.

15. Verfahren nach Anspruch 14,
**dadurch gekennzeichnet,**
**dass** die Wertermittlungsinformation (WEI) die Verknüpfung von zwei semantisch übereinstimmenden Transaktionsparametern (P11, P21) unterschiedlicher Transaktionen (T11, T21) angibt.

16. Verfahren nach einem der Ansprüche 5 bis 15,
**dadurch gekennzeichnet,**
**dass** mittels der gemeinsamen Nachbedingungsroutine (NBR) das Vorliegen von zugeordneten Nachbedingungsparametern (NBP) überprüft und die zugeordneten Nachbedingungsaktionen (NBA) ausgeführt werden.

17. Verfahren nach einem der vorhergehenden Ansprüche,
**dadurch gekennzeichnet,**
**dass** dem Benutzer (B) des universellen Sprachdialogsystems (1) während der Ausführung der ermittelten Transaktion (T11) einer der Hintergrundapplikationen (HA1, HA2) vorgegebene Informations- bzw. Aktionsprompts (AP) angezeigt werden.

18. Universelles Sprachdialogsystem (1) zur Ansteuerung zumindest einer ersten und zweiten Hintergrundapplikation (HA1, HA2) gemäß dem Verfahren nach einem der vorhergehenden Ansprüche, bestehend aus zumindest einer Eingabeeinheit (2) zur Erfassung einer Benutzeräußerung (BE), welche Aktionsinformationen (AI) aufweist, einer Dialog-Management-Einheit (3), einer Ausgabeeinheit (4) und einer Steuereinheit (9),
**dadurch gekennzeichnet,**
**dass** die Dialog-Management-Einheit (3) eine universelle und deklarativ ausgebildete Dialogspezifikation (UDS) aufweist und
**dass** die Steuereinheit (9) zur Ausführung einer Auswerteroutine (AR) ausgebildet ist, die jeweils semantisch übereinstimmende Transaktionsparameter (P11 - P1X, P21 - P2X) der ersten Hintergrundapplikation (HA1) und der zweiten Hintergrundapplikation (HA2) ermittelt und bei semantischer Übereinstimmung diese miteinander verknüpft, so dass bereits erhaltene Aktionsinformationen (AI) zur Ausführung zumindest einer weiteren Transaktion wieder verwendet werden.

19. Universelles Sprachdialogsystem (1) nach Anspruch 18,
**dadurch gekennzeichnet,**
**dass** das universelle Sprachdialogsystem (1) rahmenbasierte Transaktionen (T11 - T1X, T21 - T2X, UT) aufweist.

## Claims

1. A method for triggering at least one first and second background application (HA1, HA2) via a universal language dialogue system (1), with which, starting from at least one user statement (BE), which exhibits action information (AI), at least one transaction (T11 - T1x, T21 - T2x) and at least one transaction parameter (P11 - P1x, P21 - P2x) allocated to this are determined from the action information (AI) for triggering at least the first or second background application (HA1, HA2), wherein first transactions (T11 - T1x) and first transaction parameters (P11 - P1x) are assigned to the first background application (HA1), and second transactions (T21 - T2x) and second transaction parameters (P21 - P2x) are assigned to the second background application (HA2), wherein
- the first and second transactions (T11 - T1x, T21 - T2x) and the first and second transaction parameters (P11 - P1x, P21-P2x) are linked to one another via a universal dialogue specification (UDS), and
- the universal dialogue specification (UDS) is evaluated via the universal language dialogue system (1) for the determination of the at least one transaction (T11) and at least one associated transaction parameter (P11) for triggering at least one of the background applications (HA1, HA2),
**characterised in that**
in each case transaction parameters (P11 - P1X, P21 - P2X) exhibiting semantic concordances of the first and second background applications (HA1, HA2) are linked to one another via the universal dialogue specification (UDS), such that action information (AI) already received is reused for executing at least one other transaction.

2. The method according to claim 1,
**characterised in that**
in the determination of a transaction (T11) comprising a plurality of associated transaction parameters (P11 - P1x or P21 - P2x respectively), all the associated transaction parameters (P11) are determined.

3. The method according to claim 1 or 2,
**characterised in that**
the universal dialogue specification (UDS) is formed as declarative.

4. The method according to any one of claims 1 to 3,
**characterised in that**
the first and second transactions (T11 - T1x, T21 - T2x) linked via the universal dialogue specification (UDS) are stored in a common transaction database (GTB).

5. The method according to any one of claims 1 to 4,
**characterised in that**
the first and second transaction parameters (P11 - P1x, P21 - P2x) linked via the universal dialogue specification (UDS) are stored in a common transaction parameter database (GPB).

6. The method according to any one of the preceding claims,
**characterised in that**
the first grammars (G11 - G1x) assigned to the first background application (HA1) and the second grammars (G21 - G2x) assigned to the second background application (HA2) are collected in a common grammar database (GGB) and assigned to the universal dialogue specification (UDS).

7. The method according to claim 6,
**characterised in that**
in each case, at least one grammar (G11 - G1x, G21 - G2x) is assigned to a transaction, and that the grammar (G11 - G1x, G21-G2x) assigned to a transaction (T11 - T1x, T21 - T2x) exhibits parameter values which in each case can be assigned to a transaction parameter (P11 - P1x, P21 - P2x).

8. The method according to any one of the preceding claims,
**characterised in that**
at least one post condition routine (NBR) is assigned to at least one of the transactions (T11 - T1x, T21 - T2x).

9. The method according to any one of the preceding claims,
**characterised in that**
in each case transactions (T11 - T1x, T21 - T2x) exhibiting functional concordances of the first and second background applications (HA1, HA2) are linked to one another via the universal dialogue specification (UDS).

10. The method according to claim 9,
**characterised in that**
for the linking of at least two functionally concordant transactions (T11, T21), a universal transaction (UT) is formed from these.

11. The method according to claim 9 or 10,
**characterised in that**
for the determination of a functional concordance between two transactions (T11, T21), the grammars (G11, G21) assigned to the transactions (T11, T21) are compared with one another, and depending on the result of the comparison, a functional concordance between two transactions (T11, T21) is determined or not.

12. The method according to claim 10 or 11,
**characterised in that**
within the framework of the linking of two functional concordant transactions (T11, T21), a common post condition routine (NBP) is assigned to the universal transaction (UT).

13. The method according to any one of the preceding claims,
**characterised in that**
to determine a semantic concordance between two transaction parameters (P11, P21), the parameter values which can be assigned to the transaction parameters (P11, P21) and provided in the respective grammar (G11, G21) are compared with one another, and depending on the result of the comparison, a semantic concordance between two transaction parameters (P11, P21) is determined or not.

14. The method according to claim 13,
**characterised in that**
the parameter value of a transaction parameter (P11 - P1x, P21-P2x) is determined by means of a transaction parameter routine (TPR), wherein a value determination information (WEI) is assigned to a transaction parameter (P11 - P1x, P21 - P2x), which indicates the determination path.

15. The method according to claim 14,
**characterised in that**
the value determination information (WEI) indicates the linking of two semantically concordant transaction parameters (P11, P21) of different transactions (T11, T21).

16. The method according to any one of claims 5 to 15,
**characterised in that**
by means of the common post condition routine (NBR), the presence of assigned post condition parameters (NBP) is checked, and the assigned post condition actions (NBA) are carried out.

17. The method according to any one of the preceding claims,
**characterised in that**
predetermined information or action prompts (AP) are indicated to the user (B) of the universal language dialogue system (1) during the performance of the determined transaction (T11) of one of the background applications (HA1, HA2).

18. A universal language dialogue system (1) for triggering at least one first and second background application (HA1, HA2) in accordance with the method according to one of the preceding claims, consisting of at least one input unit (2) for capturing a user statement (BE) which exhibits action information (AI), a dialogue management unit (3), an output unit (4), and a control unit (9),
**characterised in that**
the dialogue management unit (3) exhibits a universal dialogue specification (UDS) declarative in form, and
that the control unit (9) is designed to carry out an evaluation routine (AR), which in each case determines the semantically concordant transaction parameters (P11 - P1X, P21 - P2X) of the first background application (HA1) and of the second background application (HA2), and, in the event of semantic concordance, links them to one another, such that action information (AI) already received is reused for executing at least one other transaction.

19. The universal language dialogue system (1) according to claim 18
**characterised in that**
the universal language dialogue system (1) exhibits frame-based transactions (T11 - T1X, T21 - T2X, UT).

## Revendications

1. Procédé de commande d'au moins une première et deuxième application d'arrière-plan (HA1, HA2) par l'intermédiaire d'un système de dialogue vocal universel (1), dans lequel partant d'au moins une intervention sonore de l'utilisateur (BE), laquelle présente des informations d'action (AI), au moins une transaction (T11 - T1x, T21 - T2x) et au moins un paramètre de transaction (P11 - P1x, P21 - P2x) affecté à celle-ci sont déterminés à partir des informations d'action (AI) pour la commande d'au moins la première ou deuxième application d'arrière-plan (HA1, HA2), dans lequel des premières transactions (T11 - T1x) et des premiers paramètres de transaction (P11 - P1x) sont affectés à la première application d'arrière-plan (HA1) et des deuxièmes transactions (T21 - T2x) et des deuxièmes paramètres de transaction (P21 - P2x) sont affectés à la deuxième application d'arrière-plan (HA2), dans lequel
- les première et deuxième transactions (T11 - T1x, T21 - T2x) et les premier et deuxième paramètres de transaction (P11 - P1x, P21 - P2x) sont combinés mutuellement par l'intermédiaire d'une spécification de dialogue universelle (UDS) et
- la spécification de dialogue universelle (UDS) est évaluée par l'intermédiaire du système de dialogue vocal universel (1) pour la détermination de l'au moins une transaction (T11) et d'au moins un paramètre de transaction (P11) correspondant pour la commande d'au moins une des applications d'arrière-plan (HA1, HA2),
**caractérisé en ce**
**que** des paramètres de transaction (P11 - P1X, P21 - P2X) présentant respectivement des correspondances sémantiques des première et deuxième applications d'arrière-plan (HA1, HA2) sont combinés mutuellement par l'intermédiaire de la spécification de dialogue universelle (UDS), de sorte que des informations d'action (AI) déjà reçues sont réutilisées pour la réalisation d'au moins une autre transaction.

2. Procédé selon la revendication 1,
**caractérisé en ce**
**que** tous les paramètres de transaction (P11) correspondants sont déterminés lors de la détermination d'une transaction (T11) présentant plusieurs paramètres de transaction (P11 - P1x ou P21 - P2x) affectés.

3. Procédé selon la revendication 1 ou 2,
**caractérisé en ce**
**que** la spécification de dialogue universelle (UDS) est réalisée de manière déclarative.

4. Procédé selon l'une quelconque des revendications 1 à 3,
**caractérisé en ce**
**que** les première et deuxième transactions (T11 - T1x, T21 - T2x) combinées par l'intermédiaire de la spécification de dialogue universelle (UDS) sont enregistrées dans une base de données de transactions commune (GTB).

5. Procédé selon l'une quelconque des revendications 1 à 4,
**caractérisé en ce**
**que** les premier et deuxième paramètres de transaction (P11 - P1x, P21 - P2x) combinés par l'intermédiaire de la spécification de dialogue universelle (UDS) sont enregistrés dans une base de données de paramètres de transaction commune (GPB).

6. Procédé selon l'une quelconque des revendications précédentes,
**caractérisé en ce**
**que** les premières grammaires (G11 - G1x) affectées à la première application d'arrière-plan (HA1) et les deuxièmes grammaires (G21 - G2x) affectées à la deuxième application d'arrière-plan (HA2) sont regroupées dans une base de données de grammaires commune (GGB) et affectées à la spécification de dialogue universelle (UDS).

7. Procédé selon la revendication 6,
**caractérisé en ce**
**qu'**au moins une grammaire (G11 - G1x, G21 - G2x) est affectée à respectivement une transaction (T11 - T1x, T21 - T2x) et que la grammaire (G11 - G1x, G21 - G2x) affectée à une transaction (T11 - T1x, T21 - T2x) présente les valeurs de paramètre pouvant être affectées respectivement à un paramètre de transaction (P11-P1x, P21 - P2x).

8. Procédé selon l'une quelconque des revendications précédentes,
**caractérisé en ce**
**qu'**au moins une routine de post-condition (NBR) est affectée à au moins une des transactions (T11 - T1x, T21 - T2x).

9. Procédé selon l'une quelconque des revendications précédentes,
**caractérisé en ce**
**que** des transactions (T11 - T1X, T21 - T2X) présentant respectivement des correspondances fonctionnelles des première et deuxième applications d'arrière-plan (HA1, HA2) sont combinées mutuellement par le biais de la spécification de dialogue universelle (UDS).

10. Procédé selon la revendication 9,
**caractérisé en ce**
**que** pour la combinaison d'au moins deux transactions (T11, T21) correspondant fonctionnellement, une transaction universelle (UT) est formée à partir de celles-ci.

11. Procédé selon la revendication 9 ou 10,
**caractérisé en ce**
**que** pour la détermination d'une correspondance fonctionnelle entre deux transactions (T11, T21), les grammaires (G11, G21) affectées aux transactions (T11, T21) sont comparées l'une avec l'autre et
**qu'**en fonction du résultat de comparaison, une correspondance fonctionnelle entre deux transactions (T11, T21) est constatée ou non.

12. Procédé selon la revendication 10 ou 11,
**caractérisé en ce**
**qu'**une routine de post-condition (NBP) commune est affectée à la transaction universelle (UT) dans le cadre de la combinaison de deux transactions (T11, T21) correspondant fonctionnellement.

13. Procédé selon l'une quelconque des revendications précédentes,
**caractérisé en ce**
**que** pour la détermination d'une correspondance sémantique entre deux paramètres de transaction (P11, P21), les valeurs de paramètre pouvant être affectées aux paramètres de transaction (P11, P21) et prévues dans la grammaire (G11, G21) respective sont comparées l'une avec l'autre et
**qu'**en fonction du résultat de comparaison, une correspondance sémantique entre deux paramètres de transaction (P11, P21) est constatée ou non.

14. Procédé selon la revendication 13,
**caractérisé en ce**
**que** la valeur de paramètre d'un paramètre de transaction (P11-P1x, P21 - P2x) est déterminée au moyen d'une routine de paramètre de transaction (TPR), dans lequel une information de détermination de valeur (WEI), qui indique le chemin de détermination, est affectée à un paramètre de transaction (P11 - P1x, P21 - P2x).

15. Procédé selon la revendication 14,
**caractérisé en ce**
**que** l'information de détermination de valeur (WEI) indique la combinaison de deux paramètres de transaction (P11, P12) correspondant sémantiquement de différentes transactions (T11, T21) .

16. Procédé selon l'une quelconque des revendications 5 à 15,
**caractérisé en ce**
**que** la présence de paramètres de post-condition (NBP) affectés est vérifiée au moyen de la routine de post-condition (NBR) commune et les actions de post-condition (NBA) affectées sont réalisées.

17. Procédé selon l'une quelconque des revendications précédentes,
**caractérisé en ce**
**que** des invites d'information ou d'action (AP) prédéfinies sont affichées à l'utilisateur (B) du système de dialogue vocal universel (1) pendant la réalisation de la transaction (T11) déterminée d'une des applications d'arrière-plan (HA1, HA2).

18. Système de dialogue vocal universel (1) pour la commande d'au moins une première et deuxième application d'arrière-plan (HA1, HA2) selon le procédé selon l'une quelconque des revendications précédentes, composé d'au moins une unité d'entrée (2) pour la détection d'une intervention sonore de l'utilisateur (BE), laquelle présente des informations d'action (AI), une unité de gestion de dialogue (3), une unité de sortie (4) et une unité de commande (9),
**caractérisé en ce**
**que** l'unité de gestion de dialogue (3) présente une spécification de dialogue réalisée de manière déclarative et universelle (UDS) et
**que** l'unité de commande (9) est réalisée pour la réalisation d'une routine d'évaluation (AR), qui détermine des paramètres de transaction (P11 - P1X, P21 - P2X) correspondant respectivement sémantiquement de la première application d'arrière-plan (HA1) et de la deuxième application d'arrière-plan (HA2) et les combine mutuellement en cas de correspondance sémantique, de telle sorte que des informations d'action (AI) déjà reçues sont réutilisées pour la réalisation d'au moins une autre transaction.

19. Système de dialogue vocal universel (1) selon la revendication 18,
**caractérisé en ce**
**que** le système de dialogue vocal universel (1) présente des transactions (T11 - T1X, T21 - T2X, UT) basées sur des trames.
